# EUROPÄISCHE PATENTSCHRIFT

(11) **EP 3 894 806 B1**
(45) Veröffentlichungstag und Bekanntmachung des Hinweises auf die Patenterteilung: **20.09.2023**
(21) Anmeldenummer: 19801555.4
(22) Anmeldetag: 11.11.2019
(51) Int. Cl.: G01F 23/28, G01F 23/284, G01F 23/296

(54) **VERFAHREN ZUR FÜLLSTANDSMESSUNG UND RADAR-BASIERTES FÜLLSTANDSMESSGERÄT**
METHOD OF LEVEL MEASUREMENT AND RADAR-BASED LEVEL GAUGE
MÉTHODE DE MESURE DU NIVEAU DE REMPLISSAGE ET APPAREIL DE MESURE DU NIVEAU DE REMPLISSAGE BASÉ SUR UN RADAR

(30) Priorität: 10.12.2018 DE 102018131604
(43) Veröffentlichungstag der Anmeldung: 20.10.2021
(73) Patentinhaber: Endress+Hauser SE+Co. KG, 79689 Maulburg (DE)
(72) Erfinder: SAUTERMEISTER, Manuel, 79650 Schopfheim (DE); MÜLLER, Daniel, 79594 Inzlingen (DE); BIRGEL, Eric, 79650 Schopfheim (DE); BLÖDT, Thomas, 79585 Steinen (DE); PANKRATZ, Klaus, 79400 Kandern (DE); DOHSE, Dirk, 79102 Freiburg (DE)
(74) Vertreter: Koslowski, Christine Adelheid
(86) Internationale Anmeldenummer: PCT/EP2019/080805
(87) Internationale Veröffentlichungsnummer: WO 2020/120044

(56) Entgegenhaltungen:
- EP-A1- 2 520 909
- EP-A2- 1 850 098
- DE-A1-102007 057 211
- DE-A1-102015 120 362

## Beschreibung

Die Erfindung betrifft ein Verfahren zur sicheren Füllstandsmessung sowie ein Radar-basiertes Füllstandsmessgerät zur Ausführung dieses Verfahrens.

In der Prozessautomatisierungstechnik werden allgemein Feldgeräte eingesetzt, die zur Erfassung oder zur Beeinflussung von Prozessvariablen dienen. Hierzu basiert die Funktionsweise der Feldgeräte auf jeweils geeigneten Messprinzipien, um die entsprechenden Prozessvariablen, wie Füllstand, Durchfluss, Druck, Temperatur, pH-Wert, Redoxpotential oder Leitfähigkeit zu erfassen. Verschiedenste solcher Feldgeräte-Typen werden von der Firma Endress + Hauser hergestellt und vertrieben.

Zur Füllstandsmessung von Füllgütern in Behältern haben sich berührungslose Messverfahren etabliert, da sie robust und wartungsarm sind. Dabei werden unter dem Begriff *"Behälter"* im Rahmen der Erfindung auch nicht-abgeschlossene Behältnisse, wie beispielsweise Becken, Seen oder fließende Gewässer verstanden. Ein zentraler Vorteil solcher Messverfahren besteht in der Fähigkeit, den Füllstand quasi kontinuierlich messen zu können. Im Kontext dieser Patentanmeldung bezieht sich dabei der Begriff *"Radar"* auf Signale mit Frequenzen zwischen 0.03 GHz und 300 GHz. Übliche Frequenzbänder, bei denen Radar-basierte Füllstandsmessung durchgeführt wird, liegen bei 2 GHz, 6 GHz 26 GHz oder 79 GHz. Der Begriff *"Optisches Signal"* bezieht sich auf elektromagnetische Wellen mit einer Frequenz zwischen 300 GHz (Infrarot) und 3000 THz (Ultraviolett). Der Begriff *"Ultraschall"* bezieht sich auf akustische Signale mit einer Frequenz zwischen 12 kHz und 10 MHz.

Im Fall von Radar- und Ultraschall-basierter Füllstandsmessung bildet das Pulslaufzeit-Prinzip ein etabliertes Messprinzip. Hierbei werden pulsförmige Signale zyklisch in Richtung des Füllguts ausgesandt und die Laufzeit pulsförmigen Empfangssignals gemessen. Auf Basis dieses Messprinzips können Füllstandsmessgeräte mit vergleichsweise geringem schaltungstechnischem Aufwand realisiert werden.

Sofern bei Radar-basierter Füllstandsmessung eine komplexere Schaltungstechnik in Kauf genommen werden kann, bietet sich zur Füllstandsmessung auch FMCW *("Frequency Modulated Continuous Wave"*) als Messprinzip an. Dieses Messprinzip beruht darauf, das Radar-Signal zwar kontinuierlich, jedoch mit modulierter Frequenz auszusenden. Dabei liegt die Frequenz des Signals in einem festgelegten Frequenzband im Bereich einer standarisierten Mittenfrequenz. Kennzeichnend für FMCW ist hierbei, dass die Sende-Frequenz nicht konstant ist, sondern sich periodisch innerhalb des festgelegten Frequenzbandes ändert. Bei einer Mittenfrequenz von 79 GHz beträgt das Frequenzband beispielsweise 2 GHz, also von 78 GHz bis 80 GHz. Auch bei FMCW wird das Aussenden bzw. Empfangen der Signale in aufeinanderfolgende Messzyklen gegliedert.

Die zeitliche Änderung der Frequenz ist bei FMCW standardmäßig linear und weist eine Sägezahn- beziehungsweise Dreiecks-Form auf. Eine Sinusförmige Änderung kann prinzipiell jedoch auch eingesetzt werden. Im Gegensatz zum Pulslaufzeit-Verfahren wird die Entfernung bzw. der Füllstand bei Implementierung des FMCW-Verfahrens auf Basis der instantanen Frequenzdifferenz des aktuellen Empfangssignals zum ausgesendeten Signal bestimmt. Das Messprinzip von FMCW und dem Pulslaufzeit-Verfahren wird beispielsweise in *"*Radar Level Detection, Peter Devine, 2000*"* beschrieben.

Jedes der oben genannten Messprinzipien bzw. jeder Signaltyp weist individuelle Vor- und Nachteile auf: Während durch Signale mit hohen Bandbreiten, also bei hohen Frequenzen, eine potentiell höhere Messgenauigkeit erreicht werden kann, kann bei Signalen mit tiefen Frequenzen aufgrund des breiteren Strahlkegels der Füllstand tendenziell auch bei schwappenden oder schäumenden Füllgütern bestimmt werden. Je nach Beschaffenheit des Füllgutes kann es wiederum vorkommen, dass das ausgesendete Signal je nach Signal-Typ (Ultraschall, Radar oder optisch) an der Füllgut-Oberfläche gestreut, absorbiert oder transmittiert wird, anstatt wie gewollt reflektiert zu werden. Die Patentanmeldung DE 10 2015 120 362 A1 ist ein Beispiel für ein Verfahren zur Radar-basierten Messung von zumindest einem Füllstand eines in einem Behälter befindlichen Füllguts. Das Verfahren umfasst zwei Teilverfahren: In einem ersten Teilverfahren, welches nach der Puls-Laufzeit-Methode arbeitet, wird ein erster Füllstandswert ermittelt. In einem zweiten Teilverfahren, welches nach der FMCW-Methode arbeitet, wird zusätzlich ein zweiter Füllstandswert ermittelt.

Der Erfindung liegt daher die Aufgabe zugrunde, ein Verfahren zur Füllstandsmessung bereitzustellen, mit dem der Füllstand unabhängig von den Rahmenbedingungen sicher bestimmt werden kann.

Die Erfindung löst diese Aufgabe durch ein Verfahren zur Messung eines Füllstandes eines in einem Behälter befindlichen Füllgutes. Das Verfahren umfasst dabei zumindest folgende Verfahrensschritte:
- Aussenden eines ersten Signals in Richtung des Füllgutes,
- Empfang eines entsprechenden ersten Empfangssignals nach Reflektion des ersten Signals im Inneren des Behälters,
- Aussenden eines zweiten Signals in Richtung des Füllgutes mit einer Leistung, die von der Leistung des ersten Signals abweicht,
- Empfang eines entsprechenden zweiten Empfangssignals nach Reflektion des zweiten Signals im Inneren des Behälters,
- Bestimmung eines ersten Füllstandswertes anhand des ersten Empfangssignals und Bestimmung eines zweiten Füllstandswertes anhand des zweiten Empfangssignals, und
- Bestimmung des ersten Füllstandswertes oder des zweiten Füllstandswertes als Füllstand, sofern der erste Füllstandswert und der zweite Füllstandswert übereinstimmen.

Durch das erfindungsgemäße Verfahren wird der Füllstand somit redundant bestimmt. Dies ermöglicht es, das zugrundeliegende Füllstandsmessgerät konform zu hohen Sicherheits-Standards (beispielsweise dem *"Safety Integrity Level 3, SIL3"* gemäß der Normenreihe IEC61508) auszulegen. Dementsprechend kann im ungewissen Fall, in dem der erste Füllstandswert und der zweite Füllstandswert nicht übereinstimmen, ein Fehlersignal ausgegeben werden.

Sofern der Vergleich der zwei unabhängig voneinander ermittelten Füllstandswerte ergibt, dass der erste Füllstandswert und der zweite Füllstandswert nicht übereinstimmen, kann zumindest bei signifikanter Abweichung durch Subtraktion des ersten Füllstandswertes vom zweiten Füllstandswert ein Differenzwert berechnet werden. Ein solcher Differenzwert entspricht gegebenenfalls der Dicke einer einzelnen Phase des Füllgutes oder der Dicke einer Schaumschicht. Somit kann das erfindungsgemäße Verfahren zusätzlich eingesetzt werden, um solche etwaigen Zusatzparameter zu bestimmen.

Wenn das erste Signal und das zweite Signal jeweils beide als Radar-Signal ausgesendet werden, kann zur Einstellung der unterschiedlichen Signal-Eigenschaften jedoch auch das erste Signal nach dem FMCW-Prinzip und das zweite Signal nach dem Pulslaufzeit-Prinzip ausgesendet werden. Dementsprechend sind bei dieser Auslegung der erste Füllstandswert anhand des FMCW-Prinzips und der zweite Füllstandswert anhand des Pulslaufzeit-Prinzips zu bestimmen. Anstelle dessen kann als erstes Signal auch ein Radar-Signal ausgesendet werden, während als zweites, abweichendes Signal ein Ultraschall-Signal ausgesendet wird. Denkbar ist es zudem, wenn als erstes Signal und/oder als zweites Signal ein optisches Signal ausgesendet wird. Erzeugt werden kann ein optisches Signal beispielsweise mittels eines Lasers.

Korrespondierend zu dem Verfahren umfasst die Erfindung ein Radar-basiertes Füllstandsmessgerät zur Durchführung derjenigen Ausführungsvarianten des Verfahrens, die rein auf Radar-Signalen basieren. Folgende Komponenten umfasst dieses Füllstandsmessgerät:
- Eine Signalerzeugungs-Einheit, die ausgelegt ist, das erste Signal und das zweite Signal jeweils als Radar-Signal in Richtung des Füllgutes auszusenden,
- eine Empfangseinheit, die konzipiert ist, um nach Reflektion des ersten Signals und des zweiten Signals im Inneren des Behälters entsprechende Empfangssignale zu empfangen,
- eine Auswertungseinheit, die ausgelegt ist, um
   ∘ anhand des ersten Empfangssignals einen ersten Füllstandswert zu ermitteln,
   ∘ anhand des zweiten Empfangssignals einen zweiten Füllstandswert zu ermitteln, und
   ∘ den ersten oder zweiten Füllstandswert als Füllstand auszugeben, sofern der erste Füllstandswert und der zweite Füllstandswert übereinstimmen.

Zur Übermittlung des Füllstandes, bzw. des ersten und/oder zweiten Füllstandswertes oder auch eines etwaigen Fehlersignals kann das Füllstandsmessgerät eine entsprechende Schnittstelle aufweisen. Alternativ oder zusätzlich können diese Werte auch an einem Display des Füllstandsmessgerätes angezeigt werden.

In Bezug zum Füllstandsmessgerät wird unter dem Begriff *"Einheit"* im Rahmen der Erfindung prinzipiell jede elektronische Schaltung verstanden, die für den jeweiligen Bestimmungszweck geeignet ausgelegt ist. Es kann sich also je nach Anforderung um eine Analogschaltung zur Erzeugung bzw. Verarbeitung entsprechender analoger Signale handeln. Es kann sich jedoch auch um eine (halbleiterbasierte) Digitalschaltung wie einem Microcontroller oder einen Speichermedium in Zusammenwirken mit einem Programm handeln. Dabei ist das Programm ausgelegt, die entsprechenden Verfahrensschritte durchzuführen bzw. die notwendigen Rechenoperationen der jeweiligen Einheit anzuwenden. In diesem Kontext können verschiedene elektronische Einheiten des Füllstandsmessgerätes im Sinne der Erfindung potentiell auch auf einen gemeinsamen physikalischen Speicher zurückgreifen bzw. mittels derselben physikalischen Digitalschaltung betrieben werden.

Anhand der nachfolgenden Figuren wird die Erfindung näher erläutert. Es zeigt:

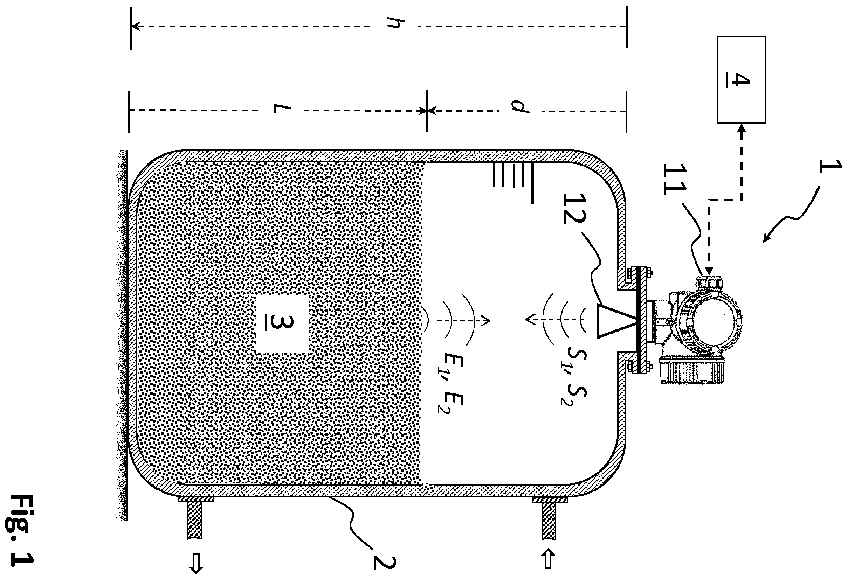

Fig. 1: Eine typische Anordnung eines Radar- oder Ultraschallbasierten Füllstandsmessgerätes.

Zum grundsätzlichen Verständnis der Erfindung ist in Fig. 1 eine typische Anordnung eines Radar- oder Ultraschall-basierten Füllstandsmessgerätes 1 an einem Behälter 2 gezeigt. In dem Behälter 2 befindet sich ein Füllgut 3, dessen Füllstand L durch das Füllstandsmessgerät 1 zu bestimmen ist. Dazu ist das Füllstandsmessgerät 1 oberhalb des maximal zulässigen Füllstands L am Behälter 2 angebracht. Je nach Einsatzgebiet kann die Einbauhöhe h des Füllstandsmessgerätes 1 über dem Behälterboden bis zu mehr als 100 m betragen.

In der Regel ist das Füllstandsmessgerät 1 über eine Schnittstelle 11, die auf einem entsprechenden Bussystem wie etwa "Ethernet", "PROFIBUS", "HART" oder "Wireless HART" basiert, mit einer übergeordneten Einheit 4, beispielsweise einem Prozessleitsystem, einer dezentralen Datenbank oder einem Handgerät wie einem Mobilfunkgerät verbindbar. Hierüber können zum einen Informationen über den Betriebszustand des Füllstandsmessgerätes 1 kommuniziert werden. Über die Schnittstelle 11 können jedoch auch der Füllstand L übermittelt werden, um gegebenenfalls am Behälter 2 vorhandene Zu- oder Abflüsse zu steuern.

Unabhängig vom implementierten Messprinzip ist das Füllstandsmessgerät 1 so ausgerichtet, dass es entsprechende Signale S₁, S₂ über eine Antenne 12 in Richtung des Füllgutes 3 aussendet. Dabei werden die Signale S₁, S₂ je nach Signaltyp (Radar, Ultraschall) und dem implementierten Messverfahren (Pulslaufzeit oder FMCW) in einer entsprechenden Signalerzeugungs-Einheit des Füllstandsmessgerätes 1 generiert.

An der Oberfläche des Füllgutes 3 werden die ausgesendeten Signale S_{1,2} reflektiert, so dass die entsprechenden Empfangssignale E_{1,2} nach einer korrespondierenden Signallaufzeit durch eine Empfangseinheit des Füllstandsmessgerätes 1 empfangen werden. Der Füllstand L lässt sich aus den Empfangssignalen E_{1,2} bestimmen, da die Signallaufzeit der Signale S_{1,2}, E_{1,2} gemäß d = h - L von der Entfernung d des Füllstandsmessgerätes 1 zur Füllgut-Oberfläche abhängt. Dementsprechend bestimmt eine hierfür ausgelegte Auswertungseinheit des Füllstandsmessgerätes 1 den Füllstand L auf Basis der Empfangssignale E_{1,2}.

Je nach Beschaffenheit des Füllgutes 3 oder Zustand des Füllstandsmessgerätes 1 kann der Füllstand L gegebenenfalls nicht mit ausreichender Sicherheit korrekt bestimmt werden, beispielsweise wenn aufgrund von chemischen Prozessen im Behälter 2 eine Schaumbildung auftritt. Auch eine Ansatzbildung an der Antenne 12 des Füllstandsmessgerätes 1 kann eine korrekte Füllstandsmessung je nach Typ des ausgesendeten Signals S₁, S₂ verhindern. Damit das Füllstandsmessgerät 1 ein hohes Maß an Gerätesicherheit aufweisen kann, beispielsweise entsprechend dem *"Safety Integrity Level 3 (SIL3)"* gemäß der Norm IEC61508, muss das Füllstandsmessgerät 1 jedoch zumindest in der Lage sein, eine Fehlermeldung auszugeben, sofern der ermittelte Füllstand L nicht valide ist.

Um dies sicherzustellen, werden vom Füllstandsmessgerät 1 erfindungsgemäß zwei Signale S₁, S₂ mit jeweils unterschiedlichen Eigenschaften ausgesendet. Dabei ist es im Rahmen der Erfindung nicht relevant, ob das erste Signal S₁ gleichzeitig, oder abwechselnd zum zweiten Signal S₂ ausgesendet wird. Auf Basis jedes der beiden Signale S₁, S₂ empfängt das Füllstandsmessgerät 1 ein separates Empfangssignal E₁, E₂, so dass anhand jedes einzelnen der zumindest zwei unterschiedlichen Empfangssignale E₁, E₂ ein separater Füllstandswert bestimmt wird. Sofern der erste Füllstandswert, der auf Basis des ersten Empfangssignals E₁ ermittelt ist, mit dem auf dem zweiten Empfangssignal E₂ basierenden Füllstandswert übereinstimmt, wird dieser Füllstandswert als valider Füllstand L ausgegeben. Durch das erfindungsgemäße Aussenden der Signale S₁, S₂ mit unterschiedlichen Eigenschaften arbeitet das Füllstandsmessgerät also redundant. Im unsicheren Fall, wenn der erste Füllstandswert nicht mit dem zweiten Füllstandswert übereinstimmt, kann das Füllstandsmessgerät 1 beispielsweise eine entsprechende Fehlermeldung über die Schnittstelle 11 ausgeben oder an einem Display anzeigen.

Die erfindungsgemäße Abweichung der Eigenschaften zwischen den zwei auszusendenden Signalen S₁, S₂ kann auf verschiedene Weisen erreicht werden: So kann das erste Signal S₁ beispielsweise als Radar-Signal abgestrahlt werden, während das zweite Signal S₂ als Ultraschall-Signal ausgesendet wird. Es können auch beide Signale S₁, S₂ als Radar-Signale ausgesendet werden, wobei im Falle des ersten (Empfangs-) Signals S₁, E₁ bzw. zur Ermittlung des ersten Füllstandswertes das FMCW-Verfahren angewendet wird, während das zweite Signal S₂ pulsförmig ausgesendet wird, so dass das Füllstandsmessgerät 1 den zweiten Füllstandswert auf Basis des Pulslaufzeit-Verfahrens ermittelt.

Unabhängig vom implementierten Signaltyp oder dem angewendeten Messverfahren können die Signale S₁, S₂ jedoch auch lediglich mit einer abweichenden Sende-Leistung und/oder einer abweichenden Sende-Frequenz erzeugt werden, um Redundanz herzustellen. Denkbar wäre zudem, eines der zwei Signale S₁, S₂ als Laser-Signal auszusenden und den korrespondierenden Füllstandswert mittels Interferometrie oder einem anderen Laufzeitverfahren zu ermitteln.

Auf Basis des erfindungsgemäßen Verfahrens kann das Füllstandsmessgerät 1 zudem dahingehend erweitert werden, dass es den vom ersten Signal S₁, E₁ ermittelten Füllstandswert vom zweiten Füllstandswert subtrahiert und dadurch einen Differenzwert berechnet, sofern der erste Füllstandswert und der zweite Füllstandswert signifikant auseinander liegen. Dies kann ein Zeichen für Schaumbildung sein, so dass der Differenzwert die Schaumdicke bzw. eine Trennschicht-Dicke zwischen zwei Phasen des Füllgutes repräsentiert. Der ermittelte Differenzwert kann in diesem Fall wiederum über die Schnittstelle 11 oder ein etwaiges Display des Füllstandsmessgerätes 1 ausgegeben werden.

### Bezugszeichenliste

- 1: Füllstandsmessgerät
- 2: Behälter
- 3: Füllgut
- 4: Übergeordnete Einheit
- d: Messdistanz
- E₁, E₂: Empfangssignale
- h: Einbauhöhe bzw. Messbereich
- L: Füllstand
- S₁, S₂: Ausgesendete Signale

## Patentansprüche

1. Verfahren zur Messung eines Füllstandes (L) eines in einem Behälter (2) befindlichen Füllgutes (3), folgende Verfahrensschritte umfassend:
- Aussenden eines ersten Signals (S₁) in Richtung des Füllgutes (3),
- Empfang eines entsprechenden ersten Empfangssignals (E₁) nach Reflektion des ersten Signals (S₁) im Inneren des Behälters (2),
- Aussenden eines zweiten Signals (S₂) in Richtung des Füllgutes (3) mit einer Leistung, die von der Leistung des ersten Signals (S₂) abweicht,
- Empfang eines entsprechenden zweiten Empfangssignals (E₂) nach Reflektion des zweiten Signals (S₂) im Inneren des Behälters (2),
- Ermittlung eines ersten Füllstandswertes anhand des ersten Empfangssignals (E₁) und Ermittlung eines zweiten Füllstandswertes anhand des zweiten Empfangssignals (E₂), und
- Bestimmung des ersten Füllstandswertes oder des zweiten Füllstandswertes als Füllstand (L), sofern der erste Füllstandswert und der zweite Füllstandswert übereinstimmen.

2. Verfahren nach Anspruch 1, wobei ein Fehlersignal ausgegeben wird, sofern der erste Füllstandswert und der zweite Füllstandswert nicht übereinstimmen.

3. Verfahren nach Anspruch 1 oder 2, wobei durch Subtraktion des ersten Füllstandswertes vom zweiten Füllstandswert ein Differenzwert berechnet wird, sofern der der erste Füllstandswert und der zweite Füllstandswert nicht übereinstimmen.

4. Verfahren nach einem der Ansprüche 1 bis 3, das zweite Signal (S₂) mit einer Frequenz, die von der Frequenz des ersten Signals (S₁) abweicht, ausgesendet wird.

5. Verfahren nach einem der vorhergehenden Ansprüche, wobei das erste Signal (S₁) und das zweite Signal (S₂) jeweils als Radar-Signal ausgesendet werden.

6. Verfahren nach Anspruch 5, wobei das erste Signal (S₁) nach dem FMCW-Prinzip ausgesendet und der erste Füllstandswert anhand des FMCW-Prinzips bestimmt wird, und wobei das zweite Signal (S₂) nach dem Pulslaufzeit-Prinzip ausgesendet und der zweite Füllstandswert anhand des Pulslaufzeit-Prinzips bestimmt wird.

7. Verfahren nach einem der Ansprüche 1 bis 4, wobei als erstes Signal (S₁) ein Radar-Signal ausgesendet wird, und wobei als zweites Signal (S₂) ein Ultraschall-Signal ausgesendet wird.

8. Verfahren nach einem der Ansprüche 1 bis 4, wobei das erste Signal (S₁) und das zweite Signal (S₂) jeweils als Ultraschall-Signal ausgesendet werden.

9. Verfahren nach einem der Ansprüche 1 bis 4, wobei das erste Signal (S₁) und/oder das zweite Signal (S₂) als optisches Signal, insbesondere mittels eines Lasers ausgesendet werden.

10. Radar-basiertes Füllstandsmessgerät zur Durchführung des Verfahrens nach einem der Ansprüche 5 oder 6, folgende Komponenten umfassend:
- Eine Signalerzeugungs-Einheit, die ausgelegt ist, das erste Signal (S₁) und das zweite Signal (S₂) jeweils als Radar-Signal in Richtung des Füllgutes (3) auszusenden,
- eine Empfangseinheit, die konzipiert ist, um nach Reflektion des ersten Signals (S₁) und des zweiten Signals (S₂) im Inneren des Behälters (2) entsprechende Empfangssignale (E₁, E₂) zu empfangen,
- eine Auswertungseinheit, die ausgelegt ist, um
∘ anhand des ersten Empfangssignals (E₁) einen ersten Füllstandswert zu ermitteln,
∘ anhand des zweiten Empfangssignals (E₂) einen zweiten Füllstandswert zu ermitteln, und
o den ersten oder zweiten Füllstandswert als Füllstand (L) auszugeben, sofern der erste Füllstandswert und der zweite Füllstandswert übereinstimmen.

11. Füllstandsmessgerät nach Anspruch 10, umfassend:
- eine Schnittstelle (11), mittels welcher der erste Füllstandswert, der zweite Füllstandswert und/oder der Füllstand (L) übermittelbar ist.

## Claims

1. A method for measuring a fill level (L) of a filling material (3) in a container (2), comprising the following method steps:
- emitting a first signal (S₁) toward the filling material (3);
- receiving a corresponding first incoming signal (E₁) after reflection of the first signal (S₁) in the interior of the container (2);
- emitting a second signal (S₂) toward the filling material (3), with a characteristic which differs from the characteristic of the first signal (S₁);
- receiving a corresponding second incoming signal (E₂) after reflection of the second signal (S₂) in the interior of the container (2);
- ascertaining a first fill level value using the first incoming signal (E₁) and determining a second fill level value using the second incoming signal (E₂); and
- determining the first fill level value or the second fill level value as the fill level (L), provided that the first fill level value and the second fill level value match.

2. The method as claimed in claim 1, an error signal being emitted if the first fill level value and the second fill level value do not match.

3. The method as claimed in claim 1 or 2, a difference value being calculated through subtraction of the first fill level value from the second fill level value if the first fill level value and the second fill level value do not match.

4. The method as claimed in one of claims 1 to 3, the second signal (S₂) being emitted with a frequency that differs from the frequency of the first signal (S₁).

5. The method as claimed in one of the preceding claims, the first signal (S₁) and the second signal (S₂) each being emitted as a radar signal.

6. The method as claimed in claim 5, the first signal (S₁) being emitted according to the FMCW principle and the first fill level value being determined using the FMCW principle, and the second signal (S₂) being emitted according to the pulse propagation time principle and the second fill level value being determined using the pulse propagation time principle.

7. The method as claimed in one of claims 1 to 4, a radar signal being emitted as a first signal (S₁) and an ultrasound signal being emitted as a second signal (S₂).

8. The method as claimed in one of claims 1 to 4, the first signal (S₁) and the second signal (S₂) each being emitted as an ultrasound signal.

9. The method as claimed in one of claims 1 to 4, the first signal (S₁) and/or the second signal (S₂) being emitted as an optical signal, in particular by means of a laser.

10. Radar-based filling level measurement device for carrying out the method as claimed in one of claims 5 or 6, comprising the following components:
- a signal generation unit that is configured to emit the first signal (S₁) and the second signal (S₂) each as a radar signal toward the filling material (3),
- a receiving unit that is designed to receive corresponding incoming signals (E₁, E₂) after reflection of the first signal (S₁) and of the second signal (S₂) in the interior of the container (2),
- an evaluation unit that is configured
∘ to ascertain a first fill level value using the first incoming signal (E₁),
∘ to ascertain a second fill level value using the second incoming signal (E₂), and
∘ to emit the first or second fill level value as the fill level (L) provided the first fill level value and the second fill level value match.

11. The fill level measurement device as claimed in claim 10, comprising:
- an interface (11) by means of which the first fill level value, the second fill level value and/or the fill level (L) can be communicated.

## Revendications

1. Procédé destiné à la mesure d'un niveau (L) d'un produit (3) se trouvant dans un réservoir (2), lequel procédé comprend les étapes suivantes :
- Émission d'un premier signal (S₁) en direction du produit (3),
- Réception d'un premier signal de réception (E₁) correspondant, après réflexion du premier signal (S₁) à l'intérieur du réservoir (2),
- Émission d'un deuxième signal (S₂) en direction du produit (3) avec une puissance différente de la puissance du premier signal (S₁),
- Réception d'un deuxième signal de réception (E₂) correspondant, après réflexion du deuxième signal (S₂) à l'intérieur du réservoir (2),
- Détermination d'une première valeur de niveau à l'aide du premier signal de réception (E₁) et détermination d'une deuxième valeur de niveau à l'aide du deuxième signal de réception (E₂), et
- Détermination de la première valeur de niveau ou de la deuxième valeur de niveau en tant que niveau (L), dans la mesure où la première valeur de niveau et la deuxième valeur de niveau coïncident.

2. Procédé selon la revendication 1, pour lequel un signal d'erreur est émis dans la mesure où la première valeur de niveau et la deuxième valeur de niveau ne coïncident pas.

3. Procédé selon la revendication 1 ou 2, pour lequel une valeur de différence est calculée en soustrayant la première valeur de niveau de la deuxième valeur de niveau, dans la mesure où la première valeur de niveau et la deuxième valeur de niveau ne coïncident pas.

4. Procédé selon l'une des revendications 1 à 3, pour lequel le deuxième signal (S₂) est émis à une fréquence différente de la fréquence du premier signal (S₁).

5. Procédé selon l'une des revendications précédentes, pour lequel le premier signal (S₁) et le deuxième signal (S₂) sont respectivement émis sous forme de signal radar.

6. Procédé selon la revendication 5,
pour lequel le premier signal (S₁) est émis selon le principe FMCW et la première valeur de niveau est déterminée à l'aide du principe FMCW, et
pour lequel le deuxième signal (S₂) est émis selon le principe du temps de propagation des impulsions et la deuxième valeur de niveau est déterminée à l'aide du principe du temps de propagation des impulsions.

7. Procédé selon l'une des revendications 1 à 4,
pour lequel un signal radar est émis en tant que premier signal (S₁), et
pour lequel un signal ultrasonore est émis en tant que deuxième signal (S₂).

8. Procédé selon l'une des revendications 1 à 4, pour lequel le premier signal (S₁) et le deuxième signal (S₂) sont respectivement émis sous forme de signal ultrasonore.

9. Procédé selon l'une des revendications 1 à 4, pour lequel le premier signal (S₁) et/ou le deuxième signal (S₂) sont émis sous forme de signal optique, notamment au moyen d'un laser.

10. Transmetteur de niveau basé sur un radar, destiné à la mise en oeuvre du procédé selon l'une des revendications 5 ou 6, lequel transmetteur comprend les composants suivants :
- une unité de génération de signaux, laquelle est conçue pour émettre respectivement le premier signal (S₁) et le deuxième signal (S₂) sous forme de signal radar en direction du produit (3),
- une unité de réception, laquelle est conçue pour recevoir des signaux de réception (E₁, E₂) correspondants, après réflexion du premier signal (S₁) et du deuxième signal (S₂) à l'intérieur du réservoir (2),
- une unité d'exploitation, laquelle est conçue pour
o déterminer une première valeur de niveau à l'aide du premier signal de réception (E₁),
o déterminer une deuxième valeur de niveau à l'aide du deuxième signal de réception (E₂), et
o émettre la première ou la deuxième valeur de niveau en tant que niveau (L), dans la mesure où la première valeur de niveau et la deuxième valeur de niveau coïncident.

11. Transmetteur de niveau selon la revendication 10, lequel transmetteur comprend :
- une interface (11), au moyen de laquelle la première valeur de niveau, la deuxième valeur de niveau et/ou le niveau (L) peuvent être transmis.
